Europäisches Patentamt

European Patent Office

Office européen des brevets

(11) Publication number: **0 184 997**
**B1**

## EUROPEAN PATENT SPECIFICATION

(45) Date of publication of patent specification: **14.06.89**

(21) Application number: **85830257.3**

(22) Date of filing: **14.10.85**

(51) Int. Cl.⁴: **B 62 D 15/02,** G 01 D 5/245

(54) Electrical steering angle sensor for motor vehicles.

㉚ ·Priority: **16.10.84 IT 6802084**

(43) Date of publication of application:
**18.06.86 Bulletin 86/25**

(45) Publication of the grant of the patent:
**14.06.89 Bulletin 89/24**

(84) Designated Contracting States:
**DE FR GB SE**

(56) References cited:
**EP-A-0 098 551**
**EP-A-0 115 381**
**FR-A-2 539 360 ,**
**GB-A-2 097 127**

(73) Proprietor: **FIAT AUTO S.p.A.**
**Corso Giovanni Agnelli 200**
**I-10135 Torino (IT)**

(72) Inventor: **Scartezzini, Vito**
**Via Gorizia 5**
**I-10024 Moncalieri (Torino) (IT)**

(74) Representative: **Quinterno, Giuseppe et al**
**c/o Jacobacci-Casetta & Perani S.p.A. Via Alfieri,**
**17**
**I-10121 Torino (IT)**

# Description

The present invention relates to an electrical steering sensor according to the preamble of the annexed Claim 1.

An electrical steering sensor of this kind is disclosed in FR—A—2 539 360. This known device, which is rather complicate and expensive, comprises a toothed-wheel rotatable with the steering column: the end faces of the teeth are rendered reflective and a light source emits a light beam which is reflected by said reflective surfaces of the wheel; two light detectors sense the light reflected by the said teeth and generate corresponding electric pulses. The known device determines the size of the steering angle with respect to a reference position which is however not always the same, but rather with respect to the position assumed by the steering column at the time a switch is operated. Thus the known device does not provide an indication of the steering angle with respect to a fixed angular reference position of the steering column.

GB—A—2 097 127 discloses general purpose contact point type measuring devices equipped with a contact type encoder.

The object of the invention is to produce a simple, robust, reliable and economical electrical sensor, which overcomes the drawbacks of the known steering sensor devices.

This object is achieved according to the invention by means of an electrical steering sensor of the aforesaid kind, having the features according to the characterised portion of annexed Claim 1.

Further characteristics and advantages of the steering sensor according to the invention will appear from the detailed description that follows with reference to the appended drawings, provided purely by way of non-limiting example, in which:

Figure 1 shows a perspective view of a sensor according to the invention applied to the steering of a motor vehicle;

Figure 2 is a perspective view of the electrical steering sensor according to the invention, on an enlarged scale;

Figure 3 is a plan view of an annular element forming part of the device illustrated in Figure 2 and

Figure 4 is a series of diagrams showing the progression of the waveform of some signals generated during the operation of the sensor, as function of time.

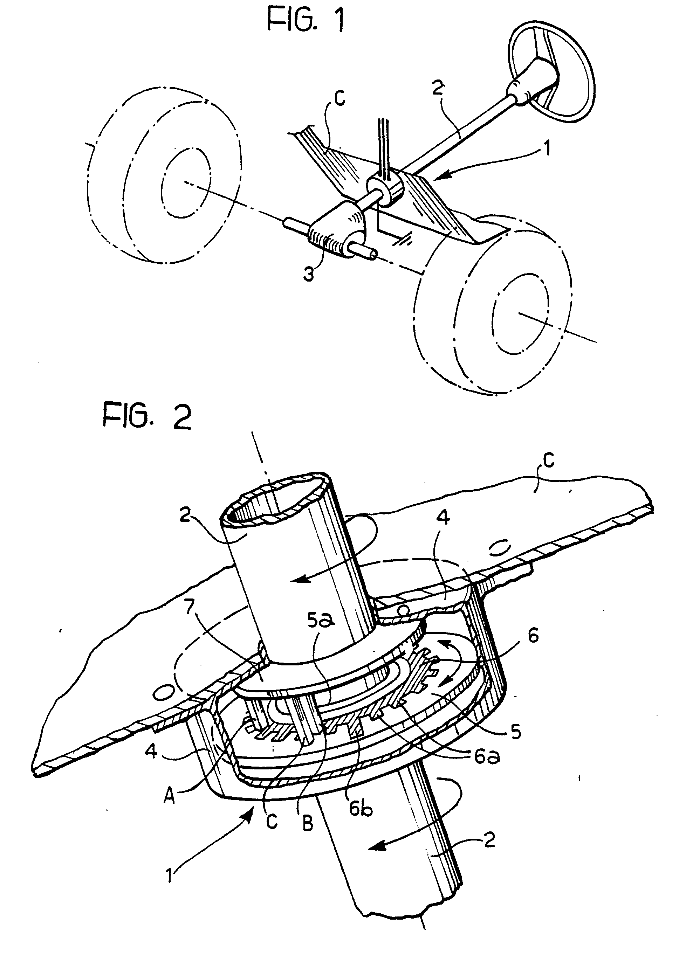

With reference to Figures 1 and 2, a sensor according to the invention, generally indicated 1, is connected to the steering column 2 of a motor vehicle, adjacent the steering box 3.

As apparent from Figure 2 in particular, in the embodiment illustrated by way of example, the sensor comprises a substantially cylindrical casing 4 secured to the body of the motor vehicle and having apertures in its end walls, through which the steering column 2 passes.

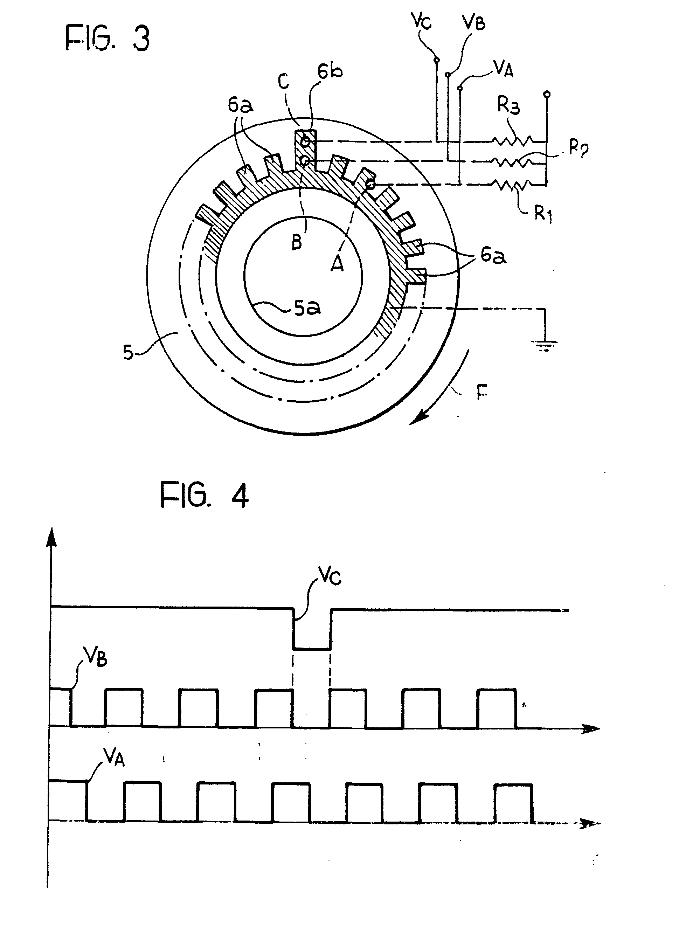

Figures 2 and 3 show a supporting disc 5 made of electrically-insulating material and having a central aperture 5a fixed coaxially about the steering column 2 within the casing 4.

An annular conductive coating 6 with a plurality of outwardly-directed equiangularly-spaced radial extensions 6a is deposited on one side of the disc 5, coaxial with the aperture 5a. All the radial projections 6a have the same dimension in the circumferential sense of the disc 5. Moreover, with the sole exception of a radially longer projection 6b, all the projections 6a have the same radial dimension.

The conductive coating 6 is connected to the earth of the electrical system of the motor vehicle in a manner not illustrated, for example through the steering column 2 itself.

A further supporting element 7, which in the embodiment illustrated in Figure 2 is also in the form of a disc provided with a central aperture, is fixed within the casing 4. The supporting element 7 is fixed to the casing 4, and the steering column 2 is thus rotatable relative to this element. On its side facing the disc 5, the latter carries three sliding contact members A, B, C the ends of which are in contact with the surface of the disc 5 bearing the conductive coating 6.

The relative disposition of these contact members will now be described with particular reference to Figure 3, in which the projections of the contact members onto the disc 5 are indicated A, B and C.

The contact members A and B are located at a distance from the axis of rotation of the steering column 2 such that their projections onto the disc 5 lie on a circumference which intersects the projections 6a of the conductive coating 6. Moreover, the distance between them in the circumferential sense is different from the period of distribution of the projections 6a of the coating 6. In the disposition illustrated by way of example in Figure 3, the contacts A and B are arranged so that, when the first contact impinges centrally on one projection 6a (or 6b), the other impinges on a lateral edge of another of these projections.

The contact member C is located at a distance from the axis of rotation of the steering column 2 such that its projection onto the disc 5 lies on a circumference which intersects only the longer radial projection 6b of the conductive layer 6.

The contact members A, B and C are connected (in a manner not shown) to the battery of the motor vehicle through resistors $R_1$, $R_2$ and $R_3$.

The sensor described above operates in the following manner.

In use, when the steering column 2 is turned, the supporting disc 5 fixed thereto rotates relative to the contacts A, B and C which are fixed. Consequently, the voltages $V_A$, $V_B$ and $V_C$ detectable between each of these contacts and earth have progressions which are shown qualitatively by the waveform of Figure 4: $V_A$ and $V_B$ show a succession of pulses each of which corresponds to a projection 6a of the conductive coating 6 on the disc 5. $V_C$ produces a pulse each time the projection 6b of the conductive coating passes the contact C.

According to the relative disposition of the contacts A and B shown in Figure 3, if the steering column and the disc 5 fixed thereto rotate in the sense of the arrow F in Figure 3, the waveform $V_B$ becomes phase-shifted in advance of the waveform $V_A$, as shown in Figure 4. It is immediately recognisable that, whenever the steering column 2 is turned in the opposite sense to the arrow F, the waveform $V_A$ would lead the waveform $V_B$.

It can therefore be concluded that the sign of the phase difference between the waveforms $V_A$ and $V_B$ is indicative of the sense of rotation of the steering column.

Moreover, it is immediately notable that the number of the pulses of $V_B$ or $V_A$ between two instants represents a measure of the angle through which the steering column 2 has rotated between these instants.

The larger projection 6b of the conductive coating 6 serves to provide a reference for the angular position of the steering column; this appendage and its associated contact C may be arranged in such a way that the signal $V_C$ produces a pulse when the steering column is in the "neutral" position or in the straight-ahead condition.

The sensor described above, with only three outputs, furnishes electrical signals containing information about the direction of steering and the size of the steering angle relative to an angular reference position.

Clearly, it is possible to make the sensor in such a way that the disc carrying the references 6a, 6b is fixed relative to the steering column, while the contacts A—C are fixed torsionally to the latter.

## Claims

1. An electrical steering sensor for determining the direction of steering and the steering angle of a steering column (2) with respect to a reference angular position, comprising a structure (5) having a periodic distribution of references (6a) and first and second electrical detector means (A, B) for generating a pulse each time they detect a reference (6a) of the structure (5); said first and second detector means (A, B) being disposed at a relative distance different from the period of distribution of the references (6a) (and from multiples thereof), characterized in that the said structure comprises a supporting disc (5) of electrically insulating material, which is mountable coaxially on the steering column (2) and has an annular circumferential electrically conductive coating (6) with equiangularly spaced projections (6a) forming the said references; one (6b) of said projections being longer than the other projections (6a); the said first and second detector means comprising a first and a second electric contact member or brush (A, B) in contact with said disc (5) along a circumference which intersects the said projections (6a); a third electrical contact member or brush (C) being provided in contact with the said disc (5) along a circumference which intersects only the said longer projection (6b).

2. A sensor according to Claim 1, wherein the said structure (5) is mounted rotatable with the steering column (2) and the contact members or brushes (A, B, C) are disposed in respective fixed positions relative to the steering column (2).

## Patentansprüche

1. Elektrischer Steuerwinkelgeber zur Feststellung der Lenkrichtung und des Lenkwinkels einer Lenksäule (2) relativ zu einer Referenzwinkelposition

mit einem Gebilde (5), auf dem sich eine periodisch verteilte Anordnung von Bezugsmarken (6a) befindet,

sowie mit einer ersten und einer zweiten elektrischen Detektoreinrichtung (A, B), die jedesmal einen Impuls erzeugen, wenn sie eine Bezugsmarke (6a) des genannten Gebildes (5) erfassen,

wobei die erste und die zweite Detektoreinrichtung (A, B) in einem relativen Abstand voneinander angeordnet sind, der von der Verteilungsperiode der Bezugsmarken (6a) (und von Vielfachen dieser Periode) abweicht, dadurch gekennzeichnet,

daß das genannte Gebilde eine Trägerscheibe (5) aus elektrisch isolierendem Werkstoff umfaßt, die koaxial auf der Lenksäule (2) montierbar ist und eine ringförmig angeordnete elektrisch leitfähige Beschichtung (6) mit in gleichen Winkelabständen angeordneten Vorsprüngen (6a) aufweist, die die genannten Bezugsmarken bilden,

daß einer (6b) dieser Vorsprünge länger ist als die anderen (6a),

daß die erste und die zweite Detektoreinrichtung ein erstes und ein zweites elektrisches Kontaktglied oder eine Kontaktbürste (A, B) umfassen, die die Trägerscheibe (5) längs einer Kreislinie berühren, die die genannten Vorsprünge (6a) schneidet,

und daß ein drittes Kontaktglied oder eine dritte Kontaktbürste (C) vorgesehen ist, die die Trägerscheibe (5) längs einer Kreislinie berührt, die nur den längeren Vorsprung (6b) schneidet.

2. Steuerwinkelgeber nach Anspruch 1, bei dem das genannte Gebilde (5) mit der Lenksäule (2) drehbar montiert ist und die Kontaktglieder oder -bürsten (A, B, C) jeweils in relativ zur Lenksäule (2) festen Positionen angeordnet sind.

## Revendications

1. Capteur électrique de direction, pour déterminer l'orientation de direction et l'angle de direction d'une colonne de direction (2) par rapport à une position angulaire de référence, comprenant une structure (5) possédant une distribution périodique de références (6a), et un premier et un deuxième moyens de détection électriques (A, B) pour produire une impulsion à chaque fois qu'ils détectent une référence (6a) de la structure (5); le premier et le deuxième moyens de détection (A, B) étant disposés à des distances relatives différentes de la période de distribution des références (6a) (et de multiples de cette période), caractérisé en ce que la structure comprend un disque de support (5) en matériau électriquement isolant, qui peut être monté coaxialement sur la colonne de direction (2) et qui possède un revêtement périphérique annulaire électriquement conducteur (6) avec des projections (6a) équiangulairement espacées formant les références précitées; une (6b) des projections étant plus longue que les autres projections (6a); le premier et le deuxième moyens détecteurs comprennent un premier et un deuxième élément de contact électrique ou balai (A, B), en contact avec le disque (5) le long d'une circonférence qui est sécante avec les projections (6a); et un troisième élément de contact électrique ou balai (C) étant prévu en contact avec le disque (5) le long d'une circonférence qui est sécante uniquement avec la projection plus longue (6b).

2. Capteur selon la revendication 1, dans lequel la structure (5) est montée rotative avec la colonne de direction (2), et les éléments de contact ou balais (A, B, C) sont disposés à des positions respectives fixes par rapport à la colonne de direction (2).

FIG. 1

FIG. 2

FIG. 3

FIG. 4